# EUROPEAN PATENT APPLICATION

(11) **EP 4 411 919 A1**
(43) Date of publication of application: **07.08.2024**
(21) Application number: 22875489.1
(22) Date of filing: 20.06.2022
(51) Int. Cl.: H01M 10/0562, C03C 10/02, H01B 1/10, H01M 4/62, H01M 10/052

(54) **SULFIDE SOLID ELECTROLYTE**

(30) Priority: 30.09.2021 JP 2021162230
(71) Applicant: AGC INC., Chiyoda-ku, Tokyo 1008405 (JP)
(72) Inventor: FUJII, Naoki, Tokyo 100-8405 (JP); KITAMURA, Riku, Tokyo 100-8405 (JP); MIYAKE, Jinsuke, Tokyo 100-8405 (JP); INABA, Makiko, Tokyo 100-8405 (JP)
(74) Representative: Müller-Boré & Partner Patentanwälte PartG mbB
(86) International application number: PCT/JP2022/024586
(87) International publication number: WO 2023/053610

(57) **Abstract**

The present invention relates to a sulfide solid electrolyte which is used for lithium ion secondary batteries and contains an argyrodite crystal that contains Li, P, S and Ha, wherein: the argyrodite crystal satisfies the requirement (A) S, Cl and/or Br, and one or more elements other than S, Cl and Br are present in a free anion site, and/or the requirement (B) some P in a 4b site and some S in a 16e site that is adjacent to the 4b site are respectively substituted by other elements; and ((1/χ(S)) × [S2-] + (1/χ(O)) × [O2-] + (1/χ(Br)) × [Br-] + (1/χ(Cr)) × [Cl-] + (1/χ(F)) × [F-]) ≤ 0.36 and [S2-] + [O2-] + [Br-] + [Cl-] + [F-] = 1 are satisfied.

## Description

### TECHNICAL FIELD

The present invention relates to a sulfide solid electrolyte to be used for a lithium-ion secondary battery.

### BACKGROUND ART

Lithium-ion secondary batteries are widely used for a portable electronic device such as a mobile phone and a notebook computer.

In related art, a liquid electrolyte has been used in a lithium-ion secondary battery, but there is a concern of liquid leakage, ignition, and the like, and it has been necessary to increase the size of a case for safety design. The lithium-ion secondary batteries have also been desired to be improved in terms of short battery life and narrow operating temperature range.

On the other hand, attention has been paid to an all-solid-state lithium-ion secondary battery in which a solid electrolyte is used as an electrolyte of a lithium-ion secondary battery, from the viewpoint of improving safety, charging and discharging at a high speed, and reducing the size of a case.

The solid electrolytes are roughly classified into sulfide solid electrolytes and oxide solid electrolytes. The sulfide ions constituting the sulfide solid electrolytes have higher polarizability and higher lithium ion conductivity than those of the oxide ions constituting the oxide solid electrolytes. As the sulfide solid electrolytes, LGPS crystals such as Li₁₀GeP₂S₁₂, argyrodite crystals such as Li₆PS₅Cl, LPS crystallized glasses such as Li₇P₃S₁₁ crystallized glass, and the like have been known.

Patent Literature 1 discloses a sulfide solid electrolyte containing an argyrodite crystal. The sulfide solid electrolyte disclosed in Patent Literature 1 has a cubic crystal structure belonging to a space group F-43m, and contains a compound represented by a composition formula: Li₇₋ₓPS_{6-X}Ha_{X} (where Ha represents Cl or Br) (where x = 0.2 to 1.8), and a lightness L value of an L* a* b* color system is 60.0 or more. This is intended to improve the charging and discharging efficiency and the cycle characteristics by increasing the lithium ion conductivity and decreasing the electron conductivity.

In the case of using such a sulfide solid electrolyte for a lithium-ion secondary battery, when a positive electrode made of a ternary system of nickel, manganese, and cobalt that is called LiCoO₂ or NMC is used, the output characteristics and the discharging capacity decrease as the charging and discharging are repeated. This is due to an increase in interfacial resistance between the positive electrode active material and the sulfide solid electrolyte. On the other hand, Non Patent Literature 1 and Non Patent Literature 2 disclose that the above-described interfacial resistance can be reduced and the performance of an all-solid-state lithium-ion secondary battery can be improved by coating the surface of LiCoO₂, which is a positive electrode active material, with lithium niobate (LiNbOs).

### CITATION LIST

### PATENT LITERATURE

Patent Literature 1: WO2015/012042

### NON-PATENT LITERATURE

Non Patent Literature 1: Solid State Ionics, Volume 225 (2012) Page 594-597
Non Patent Literature 2: Chemistry of Materials, 22(3) (2010) Page 949-956

### SUMMARY OF INVENTION

### TECHNICAL PROBLEM

The ideal thickness of the surface coating of the positive electrode active material using a coating agent such as LiNbO₃ is 7 nm to 10 nm, but it is difficult to apply such a very thin coating uniformly and with good reproducibility. When using a spinel crystal LiNiₓMn₂₋ₓO₄, which is known as a high potential positive electrode active material, the coating agent such as LiNbO₃ may not be suitable for the surface coating since it cannot withstand high electromotive force and decomposes.

Therefore, an object of the present invention is to provide a sulfide solid electrolyte that prevents deterioration in battery characteristics during repeated charging and discharging without coating the surface of a positive electrode active material such as LiCoO₂ or NMC.

### SOLUTION TO PROBLEM

As a result of intensive studies, the present inventors have found that the above problems can be solved by adopting, as a sulfide solid electrolyte, an argyrodite crystal, which has a feature of being able to be substituted with various elements, and dissolving a component that cannot be dissolved in the related art, and have completed the present invention.

That is, the present invention relates to the following (1) to (8).
(1) A sulfide solid electrolyte to be used for a lithium-ion secondary battery, the sulfide solid electrolyte including:
   an argyrodite crystal including Li, P, S, and Ha, in which
   the Ha represents at least one element selected from the group consisting of F, Cl, Br, and I, and the Ha includes at least one of Cl and Br,
   the argyrodite crystal satisfies at least one of (A) and (B); (A) is that S, at least one of Cl and Br, and one or two or more elements different from S, Cl and Br are present in a free anion site; and (B) is that a part of P in a 4b site and a part of S in a 16e site that is adjacent to P in the 4b site are respectively substituted with other elements, and
   in the argyrodite crystal, relationships of {(1/χ_{(S)}) × [S²⁻] + (1/χ_{(O)}) × [O²⁻] + (1/χ_{(Br)}) × [Br⁻] + (1/χ_{(Cl)}) × [Cl⁻] + (1/χ_{(F)}) × [F⁻]} ≤ 0.36 and [S²⁻] + [O²⁻] + [Br⁻] + [Cl⁻] + [F⁻] = 1 are satisfied, provided that [S²⁻], [O²⁻], [Br⁻], [Cl⁻], and [F⁻] represent free anion contents, and χ_{(S)}, χ_{(O)}, χ_{(Br)}, χ_{(Cl)}, and χ_{(F)} represent electronegativities thereof.
(2) The sulfide solid electrolyte according to the above (1), in which
   the argyrodite crystal further includes at least one of O and F.
(3) The sulfide solid electrolyte according to the above (1) or (2), in which
   a relationship of {(1/χ_{(S)}) × [S²⁻] + (1/χ_{(O)}) × [O²⁻] + (1/χ_{(Br)}) × [Br⁻] + (1/χ_{(Cl)}) × [Cl⁻] + (1/χ_{(F)}) × [F⁻]} ≤ 0.34 is satisfied, provided that [S²⁻], [O²⁻], [Br⁻], [Cl⁻], and [F⁻] represent the free anion contents, and χ_{(S)}, χ_{(O)}, χ_{(Br)}, χ_{(Cl)}, and χ_{(F)} represent the electronegativities thereof.
(4) The sulfide solid electrolyte according to any one of the above (1) to (3), in which
   the argyrodite crystal satisfies the (B), and
   an average bond distance between the 4b site and the 16e site adjacent thereto is 2.07 Å or more.
(5) The sulfide solid electrolyte according to any one of the above (1) to (4), in which
   the argyrodite crystal satisfies the (B), and
   an element M substituted for the part of P in the 4b site forms an MS₄ tetrahedral structure having an ionic radius larger than an ionic radius of PS₄³⁻.
(6) The sulfide solid electrolyte according to the above (5), in which
   the element M in the MS₄ tetrahedral structure is at least one of Si and Sn.
(7) The sulfide solid electrolyte according to any one of the above (1) to (6), in which
   the argyrodite crystal satisfies the (A), and
   the free anion contents satisfy a relationship of 0 < {[Br⁻]/([F⁻] + [Cl⁻] + [Br⁻])} < 2.
(8) The sulfide solid electrolyte according to any one of the above (1) to (7), in which
   an electromotive force of the lithium-ion secondary battery is 4.3 V or more.

### ADVANTAGEOUS EFFECTS OF INVENTION

According to the sulfide solid electrolyte of the present invention, deterioration in battery characteristics during repeated charging and discharging can be prevented without coating the surface of a positive electrode active material with LiNbO₃ or the like. Therefore, when the positive electrode active material is used for a lithium-ion secondary battery, the sulfide solid electrolyte eliminates the need for a step of applying a very thin coating to the surface of the positive electrode active material uniformly and with good reproducibility. Even when using a spinel crystal LiNiₓMn₂₋ₓO₄, which is known as a high potential positive electrode active material, it can be applied without concern about decomposition of the coating agent or the like.

### BRIEF DESCRIPTION OF DRAWINGS

[FIG. 1] FIG. 1 is an XRD pattern of sulfide solid electrolytes of Example 1 and Example 2, in which a peak at 2θ = 28.5° is a peak derived from a Si internal standard.
[FIG. 2] FIG. 2 is an XRD pattern of a sulfide solid electrolyte of Example 8.
[FIG. 3] FIG. 3 is a charging and discharging curve obtained in a battery evaluation of Example 1.

### DESCRIPTION OF EMBODIMENTS

Hereinafter, the present invention will be described in detail, but the present invention is not limited to the following embodiment and can be freely modified and implemented without departing from the gist of the present invention. In addition, the symbol "-" or the word "to" that is used to express a numerical range includes the numerical values before and after the symbol or the word as the lower limit value and the upper limit value of the range, respectively.

### <Sulfide Solid Electrolyte>

A sulfide solid electrolyte according to the present embodiment (hereinafter, may be simply referred to as a "solid electrolyte") is used for a lithium-ion secondary battery and contains an argyrodite crystal containing Li, P, S, and Ha. Ha represents at least one element selected from the group consisting of F, Cl, Br, and I, and includes at least one of Cl and Br.

The argyrodite crystal in the present embodiment satisfies at least one of the following (A) and (B).
(A) S, at least one of Cl and Br, and one or two or more elements different from S, Cl and Br are present in a free anion site.
(B) A part of P in a 4b site and a part of S in a 16e site that is adjacent to P in the 4b site are respectively substituted with other elements.

In the argyrodite crystal in the present embodiment, the following relationships are satisfied, where [S²⁻], [O²⁻], [Br⁻], [Cl⁻], and [F⁻] represent free anion contents, and χ_{(S)}, χ_{(O)}, χ_{(Br)}, χ_{(Cl)}, and χ_{(F)} represent anion electronegativities.{(1/χ(S)) × [S2-] + (1/χ(O)) × [O2-] + (1/χ(Br)) × [Br-] + (1/χ(Cl)) × [Cl-] + (1/χ(F)) × [F-]} ≤0.36, and [S2-] + [O2-] + [Br-] + [Cl-] + [F-] =1

Hereinafter, {(1/χ_{(S)}) × [S²⁻] + (1/χ_{(O)}) × [O²⁻] + (1/χ_{(Br)}) × [Br⁻] + (1/χ_{(Cl)}) × [Cl⁻] + (1/χ_{(F)}) × [F⁻]} may be referred to as an "anion parameter".

When the argyrodite crystal satisfies at least one of the above (A) and (B) and has an anion parameter of 0.36 or less, degradation in battery characteristics during repeated charging and discharging can be prevented without coating the surface of a positive electrode active material with LiNbO₃ or the like.

First, a case where the above (A) is satisfied and the anion parameter is small will be described.

The free anion site in the above (A) refers to an anion that is not covalently bonded to a cation, and when the argyrodite crystal is a cubic crystal, a 4a site and a 4d site correspond to the free anion site. Details will be described later, and when the argyrodite crystal is a rhombohedral crystal, a 1a site and a 3b site correspond to the free anion site.

A proportion of anions, that is, free anions present in the free anion site can be determined by synchrotron X-ray diffraction (XRD) measurement. Specifically, a pattern obtained by the synchrotron XRD measurement is subjected to structure refining analysis by a Rietveld method to determine an occupying element and an occupancy rate of each site. When a content of each element and a total thereof are determined by composition analysis using ICP emission spectrometry, atomic absorption, ion chromatography, or the like, and a crystal structure is refined by the Rietveld method based on the values, analysis can be performed with higher accuracy.

Examples of the one or two or more elements different from S, Cl and Br present in the free anion site include O, F, Se, and I. From the viewpoint of increasing the electronegativity and reducing the anion parameter, at least one of O and F is preferable, and F is more preferable.

For example, when O is present in the free anion site, O is substituted with S. When F is present in the free anion site, F is substituted with Cl or Br.

When such substitution is performed, the anion parameter becomes small, and the deterioration in battery characteristics can be prevented even without coating the surface of the positive electrode active material with LiNbO₃ or the like.

The reason for this is not clear, and is considered as follows.

When a lithium-ion secondary battery using a positive electrode active material whose surface is not coated is charged and discharged, components are mutually diffused at an interface between the positive electrode active material and the sulfide solid electrolyte. As a result, an oxidation reaction, strictly speaking, a reaction between oxygen of the positive electrode active material and a sulfide of the solid electrolyte, or the like occurs on a sulfide solid electrolyte side. One of the causes of the oxidation reaction may be free anions, that is, unstable ions that are not covalently bonded to other elements, particularly such as S²⁻. It is considered that when the free anion is formed of an element having a high electronegativity as much as possible, a gap between an upper end of a valence band and a lower end of a conduction band becomes large, and the oxidation reaction is less likely to occur in a high potential state, accordingly, a good solid electrolyte interface (SEI) is formed at the interface between the positive electrode active material and the sulfide solid electrolyte, and therefore, the deterioration in battery characteristics can be prevented.

From the viewpoint of obtaining a suitable lithium ion conductivity while obtaining the above effect, for the free anion contents, a relationship of 0 < {[Br⁻]/([F⁻] + [Cl⁻] + [Br⁻])} < 2 is preferably satisfied, and a value represented by {[Br⁻]/([F⁻]+[Cl⁻]+[Br⁻])} is more preferably more than 0.3, and still more preferably more than 0.5, and is more preferably less than 1.5, and still more preferably less than 1.2.

Next, a case where the above (B) is satisfied and the anion parameter is small will be described.

Another element M to be substituted for a part of P in the 4b site in the above (B) is preferably at least one element selected from the group consisting of metal elements and metalloid elements of Groups 2 to 14 of the periodic table, and more preferably an element forming an MS₄ tetrahedral structure having an ionic radius larger than that of PS₄³⁻.

Examples of the element M forming an MS₄ tetrahedral structure having a large ionic radius include Si, Sn, Al, V, Ti, Zr, Sb, and Ge. Among them, Si, Sn, V, Ge, and Zr are more preferable since they have a high valence and can be easily substituted for P.

Another element to be substituted for a part of S in the 16e site in the above (B) is preferably O, and Se, and O is more preferable from the viewpoint of increasing the electronegativity and reducing the anion parameter.

The other element M to be substituted for a part of P in the 4b site and other element to be substituted for a part of S in the 16e site can be determined by the synchrotron XRD measurement and the Rietveld analysis, similar to those used for the proportion of free anions.

In this way, when the above (B) is satisfied, the deterioration in battery characteristics can be prevented even without a coating agent. When the above (B) is satisfied, the effect of the present invention is exhibited even when the value of the anion parameter is slightly high, as compared with the case where the above (A) is satisfied and the above (B) is not satisfied.

The reason for this is not clear, and is considered as follows.

When the MS₄ tetrahedral structure having an ionic radius different from that of the PS₄³⁻ structure enters the crystal structure, the charge distribution in the argyrodite crystal becomes more homogeneous. As a result, it is considered that an unstable anion that is not covalently bonded to other elements, particularly such as S²⁻, is stabilized, a good SEI is formed at the interface between the positive electrode active material and the sulfide solid electrolyte, and thus the deterioration in battery characteristics can be prevented.

The above effect is more significant when the ionic radius of the MS₄ tetrahedral structure is larger than that of the PS₄³⁻ structure. Therefore, as described above, the element M to be substituted for a part of P in the 4b site is preferably an element forming an MS₄ tetrahedral structure having an ionic radius larger than that of PS₄³⁻, and the element M is more preferably at least one of Si and Sn. That is, the MS₄ tetrahedral structure is more preferably at least one of SiS₄⁴⁻ and SnS₄⁴⁻, and in this case, it is preferable that a part of S is further substituted with O, Se, or the like, and the above (B) is satisfied.

When the ionic radius of the MS₄ tetrahedral structure is larger than that of the PS₄³⁻structure, an average bond distance between the 4b site and the 16e site adjacent thereto is preferably 2.07 Å or more, more preferably 2.08 Å or more, and still more preferably 2.10 Å or more. From the viewpoint of maintaining the crystal structure, the average bond distance is preferably 2.20 Å or less, more preferably 2.17 Å or less, and still more preferably 2.15 Å or less.

In the PS₄³⁻ structure, the average bond distance between the 4b site and the 16e site adjacent thereto is 2.04 Å. The average bond distance can be determined by the synchrotron XRD measurement and the Rietveld analysis.

The argyrodite crystal in the present embodiment preferably further contains at least one of O and F in addition to Li, P, S, and at least one of Cl and Br.

From the viewpoint of the above (A), both O and F are preferable as an element contained in the free anion site, and F is more preferable.

From the viewpoint of the above (B), O is preferably contained as an element to be substituted for a part of S in the 16e site that is adjacent to P in the 4b site.

Further, from the viewpoint of reducing the anion parameter, it is preferable to contain O having an electronegativity lower than the electronegativity χ_{(S)} of S, and F having an electronegativity lower than the electronegativities χ_{(Br)}, χ_{(Cl)} of Br and Cl.

The anion parameter represented by {(1/χ_{(S)}) × [S²⁻] + (1/χ_{(O)}) × [O²⁻] + (1/χ_{(Br)}) × [Br⁻] + (1/χ_{(Cl)}) × [Cl⁻] + (1/χ_{(F)}) × [F⁻]} is a value that is a sum of products of a ratio of the free anion content and a reciprocal of the electronegativity of each element.

As the the value of the anion parameter is low, the argyrodite crystal is formed of an element having a higher electronegativity, and the gap between the upper end of the valence band and the lower end of the conductor becomes larger, and the oxidation reaction is less likely to occur in a high potential state.

In the present embodiment, the value of the anion parameter may be 0.36 or less, preferably 0.35 or less, and more preferably 0.34 or less. From the viewpoint of forming an argyrodite crystal, the value of the anion parameter is preferably 0.30 or more, and more preferably 0.32 or more.

The electronegativity of each element in the anion parameter is χ_{(S)} = 2.5, χ_{(O)} = 3.5, χ_{(Br)} = 2.8, χ_{(Cl)} = 3.0, and χ_{(F)} = 4.0.

The argyrodite crystal structure may be analyzed from an XRD pattern using a general-purpose device, and is preferably analyzed from a synchrotron XRD pattern from the viewpoint of analysis precision.

An arrangement of each element in the crystal structure can be specified by refining the crystal structure using the Rietveld method on an XRD pattern measured using synchrotron X-rays.

Further, the content of each element and the total thereof can be determined by composition analysis using ICP emission spectrometry, atomic absorption, ion chromatography, or the like, and when the crystal structure is refined by the Rietveld method based on the values, a crystal composition can be determined with higher accuracy.

In the case where peaks are present at positions of 2θ = 15.7° ± 0.8° and 30.2° ± 0.8° in the XRD pattern when a radiation source is Cu-Kα ray, it can be said that the crystal is a cubic argyrodite crystal. In addition to the above peaks, the XRD pattern preferably has a peak at a position of 2θ = 18.0° ± 0.8°, and further more preferably has a peak at a position of 2θ = 25.7° ± 0.8°.

In the case where peaks are present at positions of 2θ = 15.8° ± 0.8°, 25.8° ± 0.8°, and 30.3° ± 0.8° in the XRD pattern when a radiation source is Cu-Kα ray, and at least two of the three peaks are split into two or more peaks, it can be said that the crystal is a rhombohedral argyrodite crystal. In addition to the above, the XRD pattern preferably has a peak not split at a position of 2θ = 18.1° ± 0.8°, and further more preferably has a peak split at a position of 2θ = 31.8° ± 0.8°.

For a ratio of contents (at%) of the elements constituting the argyrodite crystal, that is, a ratio of contents of the elements contained in the argyrodite crystal, when the composition is represented by Li_{α}PS_{β}Ha_{γ}, relationships of 5 < α < 7, 3 < β < 6, and 0 < γ < 2.5 are preferably satisfied, since the argyrodite crystal is likely to be formed. For such an element ratio, relationships of 5.1 < α < 6.3, 3.5 < β < 5.3, and 0.7 < γ < 2.0 are more preferably satisfied, and relationships of 5.2 < α < 6.2, 3.7 < β < 5.2, and 0.8 < γ < 1.9 are still more preferably satisfied.

That is, α is preferably more than 5, more preferably more than 5.1, and still more preferably more than 5.2, and is preferably less than 7, more preferably less than 6.3, and still more preferably less than 6.2.

β is preferably more than 3, more preferably more than 3.5, and still more preferably more than 3.7, and is preferably less than 6, more preferably less than 5.3, and still more preferably less than 5.2.

γ is preferably more than 0, more preferably more than 0.7, and still more preferably more than 0.8, and is preferably less than 2.5, more preferably less than 2.0, and still more preferably less than 1.9.

A preferable crystal structure of the argyrodite crystal is a cubic crystal such as F-43m, and may be the above-described rhombohedral crystal, or a hexagonal crystal, a tetragonal crystal, an orthorhombic crystal, a monoclinic crystal, or the like with reduced symmetry or a triclinic crystal with further reduced symmetry may exist.

The halogen element represented by Ha is at least one selected from the group consisting of F, Cl, Br, and I, and in view that the crystal is likely to be an argyrodite crystal, at least one of Cl and Br is contained, Cl is preferably contained, and simple Cl or a mixture of Cl and Br is more preferably contained.

When Ha contains Cl and Br, a content ratio represented by (c1/c2) is preferably 0.1 or more, more preferably 0.3 or more, and still more preferably 0.5 or more, where c1 (at%) is the content of Cl in the argyrodite crystal and c2 (at%) is the content of Br. The (c1/c2) is preferably 10 or less, more preferably 3 or less, and still more preferably 1.6 or less. When the (c1/c2) satisfies the above range, an interaction between lithium ions and halide ions is weakened, and the lithium ion conductivity of the sulfide solid electrolyte is likely to be satisfactory. This is considered to be due to the influence of the mixed anion effect, which weakens the interaction between cations and anions by mixing bromide ions having an ionic radius larger than that of chloride ions. When the (c1/c2) satisfies the above range, the cycle characteristics of the lithium-ion secondary battery are likely to be improved.

For a ratio of contents (at%) of the elements constituting the argyrodite crystal in the case where Ha contains Cl and Br, when the composition is represented by Li_{α}PS_{β}Cl_{γ1}Br_{γ2}, γ1 is preferably 0.1 or more, more preferably 0.3 or more, and still more preferably 0.5 or more, and is preferably 1.5 or less, more preferably 1.4 or less, and still more preferably 1.3 or less. γ2 is preferably 0.1 or more, more preferably 0.3 or more, and still more preferably 0.5 or more, and is preferably 1.9 or less, more preferably 1.6 or less, and still more preferably 1.4 or less. When γ1 and γ2 each satisfy the above ranges, a stable argyrodite crystal can be obtained while an abundance proportion of halide ions in the crystal is optimized and the interaction between anions and lithium ions in the crystal is reduced. Accordingly, the lithium ion conductivity of the sulfide solid electrolyte is likely to be satisfactory. When γ1 and γ2 satisfy the above ranges, the cycle characteristics of the lithium-ion secondary battery are likely to be improved.

Here, α, β, and (γ1 + γ2) preferably satisfy the same relationships as α, β, and γ described above, respectively.

The crystallite size of the crystals constituting a crystal phase is preferably small from the viewpoint of obtaining a good lithium ion conductivity when the sulfide solid electrolyte is used as a sulfide solid electrolyte layer to form a battery. Specifically, the crystallite size is preferably 1000 nm or less, more preferably 500 nm or less, and still more preferably 250 nm or less. The lower limit of the crystallite size is not particularly limited, and the crystallite size is generally 5 nm or more.

The crystallite size can be calculated by using a half-width of a peak of an XRD pattern and a Scherrer equation. A more precise value of the crystallite size can be determined by refining the crystal structure using the Rietveld method.

The content of the argyrodite crystal with respect to all components constituting the sulfide solid electrolyte is preferably 50 mass% or more, more preferably 65 mass% or more, and still more preferably 80 mass% or more, from the viewpoint of implementing good battery characteristics. Although the upper limit of the content is not particularly limited and the content may be 100 mass%, the content is generally 99 mass% or less.

The proportion of the argyrodite crystal can be calculated by adding an internal standard substance, measuring with XRD or neutral-beam scattering, and then comparing a peak intensity with that of the internal standard substance. The argyrodite crystal may include two or more crystal structures.

The content of the argyrodite crystal is a content including contents of an element other than S, Cl, and Br present in the free anion site and other elements substituted for P in the 4b site and S in the 16e site.

The content of each element and the total thereof are determined by composition analysis using ICP emission spectrometry, atomic absorption, ion chromatography, or the like.

Other than the argyrodite crystal, an amorphous component which may become argyrodite, an oxide anion, and an impurity crystal phase such as Li₃PS₄, Li₄P₂S₆, Li₂S, and LiHa (where Ha is at least one halogen element selected from F, Cl, Br, and I) may be contained in the solid electrolyte.

The impurity crystal phase such as Li₃PS₄, Li₄P₂S₆, Li₂S, and LiHa may be contained as long as it does not affect the lithium ion conductivity and the battery characteristics. For example, the content of the impurity crystal phase may be 15 mass% or less, preferably 10 mass% or less, and more preferably 5 mass% or less, with respect to the sulfide solid electrolyte. When the impurity crystal phase is contained, it is better to perform crystal structure analysis in a manner of subtracting the impurity crystal phase. When the content of the impurity crystal phase is small, the impurity crystal phase may not affect the analysis results much.

When the sulfide solid electrolyte is formed into a pressure-molded body at a pressure of 380 MPa, the lithium ion conductivity of the sulfide solid electrolyte at 25°C is preferably 1 mS/cm or more, more preferably 2 mS/cm or more, and still more preferably 4 mS/cm or more, and the higher the lithium ion conductivity, the better. The lithium ion conductivity can be determined from a Nyquist plot obtained by AC impedance measurement.

### (Lithium-ion Secondary Battery)

In the case where the sulfide solid electrolyte according to the present embodiment is used for a lithium-ion secondary battery, a good SEI is formed without performing surface coating on the positive electrode active material, and thus the deterioration in battery characteristics during repeated charging and discharging can be prevented.

In the charging and discharging test, an initial characteristic represented by (discharging capacity at first cycle/charging capacity at first cycle) is preferably more than 0.60, more preferably 0.65 or more, and still more preferably 0.70 or more, and the higher the initial characteristic, the better.

In the charging and discharging test, a capacity retention ratio represented by (discharging capacity at fifth cycle/discharging capacity at first cycle) × 100 (%) is preferably more than 86%, more preferably 88% or more, and still more preferably 90% or more, and the higher the capacity retention ratio, the better.

In the case where the sulfide solid electrolyte is used for a lithium-ion secondary battery, the sulfide solid electrolyte may form a solid electrolyte layer together with other components such as a binder as necessary. As the binder or other components, known substances according to the related art are used.

The content of the sulfide solid electrolyte with respect to the entire solid electrolyte layer is preferably 80 mass% or more, and more preferably 90 mass% or more.

As a method for forming the solid electrolyte layer, a known method according to the related art is used. As an example of wet molding, the solid electrolyte layer can be formed by dispersing or dissolving the components constituting the solid electrolyte layer in a solvent to form a slurry, applying the slurry in the form of a layer, that is, a sheet, drying the slurry, and optionally pressing the slurry. If necessary, de-binder treatment may be performed by heating. The thickness of the solid electrolyte layer can be easily adjusted by adjusting the coating amount of the slurry.

In addition, instead of wet molding, the solid electrolyte layer may be formed by press-molding the sulfide solid electrolyte powder or the like by dry method on a surface of a positive electrode, a negative electrode, or the like. Alternatively, the solid electrolyte layer may be formed on another base material and transferred onto a surface of a positive electrode, a negative electrode, or the like.

The sulfide solid electrolyte may be mixed with a positive electrode active material or a negative electrode active material to be used as a positive electrode layer or a negative electrode layer. As the positive electrode active material or negative electrode active material used for the positive electrode layer or negative electrode layer, a current collector, a binder, a conductive aid, and the like, known materials according to the related art are used.

Among them, as for the positive electrode active material, it is preferable to use LiCoO₂, NMC, and the like, which are conventionally surface-coated with LiNbO₃ in the related art, or the like, since the effect exhibited by the present invention can be further obtained.

A positive electrode active material that operates at a higher potential than in the related art, for which surface coating with LiNbO₃ or the like is difficult to apply, is also preferable, since the effect of the present invention can be further obtained. Specifically, a positive electrode active material generally called 5V class, such as spinel crystal LiNiₓMn₂₋ₓO₄, which is known as a high potential positive electrode active material, is preferable.

As an index of the positive electrode active material that operates at a higher potential than in the related art, the sulfide solid electrolyte is preferably used for a lithium-ion secondary battery having an electromotive force of 4.3 V or more.

A lithium-ion secondary battery containing the sulfide solid electrolyte includes the solid electrolyte layer, the positive electrode layer, and the negative electrode layer.

As the material of an outer casing of the lithium-ion secondary battery, known materials according to the related art may also be used. As the shape of the lithium-ion secondary battery, known shapes according to the related art may be used, and examples of the shape of the lithium-ion secondary battery include a coin shape, a sheet shape (film shape), a folded shape, a wound cylindrical shape with a bottom, and a button shape. The shape thereof can be appropriately selected according to the application.

### <Method for Manufacturing Sulfide Solid Electrolyte>

In a method for manufacturing the sulfide solid electrolyte to be used for a lithium-ion secondary battery according to the present embodiment, a homogeneous intermediate compound is formed before precipitating an argyrodite crystal. The homogeneous intermediate compound is not simply a mixture of a plurality of raw materials, but one in which the raw materials react with each other and a structure becomes, for example, amorphous or melted into a molten solution.

In order to obtain a homogeneous amorphous intermediate compound, for example, there is a method in which raw materials are mixed by a medium-less pulverizer such as a mixer mill or a pin mill, and then mechanically mixed by a medium pulverizer such as a planetary ball mill, a bead mill, or an Atritor (registered trademark) to cause a mechanochemical reaction. The raw materials may be mixed in a mixer mill or a pin mill and then dissolved, and the mixture in a dissolved state can be called a homogeneous intermediate compound. The raw materials may be once dissolved in an organic solvent or the like.

The method for manufacturing the sulfide solid electrolyte according to the present embodiment is not particularly limited as long as an argyrodite crystal can be obtained through such a homogeneous intermediate compound. Examples thereof include the following two manufacturing methods: a manufacturing method i and a manufacturing method ii.

### (Manufacturing Method i)

The manufacturing method i includes:
a step i-1 of mixing raw materials to obtain a raw material mixture;
a step i-2 of heating the raw material mixture to obtain a molten material as an intermediate compound; and
a step i-3 of cooling the molten material to precipitate an argyrodite crystal.

### (Manufacturing Method ii)

The manufacturing method ii includes:
a step ii-1 of mixing raw materials to obtain an amorphous intermediate compound; and
a step ii-2 of heating and sintering the intermediate compound to precipitate an argyrodite crystal.

The intermediate compound obtained in the above step ii-1 is an amorphous intermediate compound in which no peaks derived from the above raw materials are observed in powder XRD measurement.

First, the manufacturing method i will be described.

The step i-1 is a step of mixing raw materials to obtain a raw material mixture.

In order to obtain an argyrodite crystal, raw materials containing Li, P, S, and Ha are used. The raw materials containing Li, P, S, and Ha may be known materials according to the related art as materials for obtaining an argyrodite crystal containing Li, P, S, and Ha. Examples thereof include a mixture of a compound containing Li (lithium), a compound containing P (phosphorus), a compound containing S (sulfur), and a compound containing Ha (halogen).

A raw material, which is a source of an element other than S, Cl, and Br present in the free anion site, and an element substituted for P in the 4b sites and S in the 16e sites, is also mixed.

Examples of the compound containing Li include lithium compounds such as lithium sulfide (Li₂S), lithium oxide (Li₂O), lithium carbonate (Li₂CO₃), lithium hydroxide (LiOH), and lithium sulfate (Li₂SO₄), and simple lithium metal.

Examples of the compound containing P include phosphorus sulfides such as diphosphorus trisulfide (P₂S₃) and diphosphorus pentasulfide (P₂S₅), phosphorus compounds such as lithium phosphate (LiPO₃, Li₄P₂O₇, and Li₃PO₄) and sodium phosphate (NaPO₃, Na₄P₂O₇, and Na₃PO₄), and simple phosphorus.

Examples of the compound containing S include lithium sulfide (Li₂S), phosphorus sulfides (P₂S₃ and P₂S₅), and hydrogen sulfide (H₂S), and simple sulfur may also be used.

Among the compound containing Ha, examples of a compound containing Cl (chlorine) include lithium chloride (LiCl), phosphorus trichloride (PCl₃), phosphorus pentachloride (PCl₅), diphosphorus tetrachloride (P₂Cl₄), phosphoryl chloride (POCl₃), sulfur dichloride (SCl₂), disulfur dichloride (S₂Cl₂), sodium chloride (NaCl), and boron trichloride (BCl₃).

Among the compound containing Ha, examples of a compound containing Br (bromine) include lithium bromide (LiBr), phosphorus tribromide (PBr₃), phosphoryl chloride (POBr₃), disulphur dibromide (S₂Br₂), sodium bromide (NaBr), and boron tribromide (BBr₃).

Among them, a combination of lithium sulfide, phosphorus sulfides, and at least one of lithium chloride and lithium bromide is preferable.

Examples of the raw material, which is a source of an element other than S, Cl, and Br present in the free anion site, and an element to be substituted for P in the 4b site and S in the 16e site, include silicon oxide (SiO₂), tin oxide (SnO), sulfides such as silicon disulfide (SiS₂), tin disulfide (SnS₂), germanium disulfide (GeS₂), vanadium (III) sulfide (V₂S₃), and zirconium disulfide (ZrS₂), alkali metal oxides such as selenium (Se), lithium oxide (Li₂O), lithium hydroxide (LiOH), and sodium oxide (Na₂O), alkali metal hydroxides, alkali metal earth oxides, and fluorides such as LiF.

These raw material to be used is very unstable in the air depending on the material, react with water to be decomposed, and may generate hydrogen sulfide gas or be oxidized. In this case, the raw materials are preferably mixed in an inert atmosphere. When raw materials unstable in the air are not used, mixing may be performed in the air.

The raw materials can be mixed by, for example, medium-less mixing such as a mixer mill, a pin mill, a powder stirrer, and air flow mixing. A part of the raw materials may be made amorphous by mixing before the step i-2.

The step i-2 is a step of heating the obtained raw material mixture to obtain a molten material as an intermediate compound.

A molten state means that no peaks derived from the raw materials are observed in high-temperature X-ray diffraction measurement. When the argyrodite crystal has, for example, a Li-P-S-Ha composition, the molten material is mixed well. Therefore, it means that the molten solution is a homogeneous compound molten material that is different from the raw materials. A simple method to confirm whether the material is in a molten state is to observe the state of the raw materials in a furnace. When no un-melted material is observed, the raw materials are completely dissolved and the molten material may be said to be an intermediate compound.

By forming the intermediate compound, it becomes easier to obtain an argyrodite crystal satisfying at least one of the (A) S, at least one of Cl and Br, and one or two or more elements different from S, Cl and Br are present in a free anion site, and the (B) a part of P in the 4b site and a part of S in a 16e site that is adjacent to P in the 4b site are respectively substituted with other elements.

The high-temperature X-ray diffraction measurement is performed after setting the measurement temperature, holding time, atmosphere, and the like such that conditions are the same as heating conditions used to obtain the molten material.

By performing the high-temperature X-ray diffraction measurement while changing the measurement temperature, changes in crystal state such as phase transition can be followed and the heating temperature at which an intermediate compound can be obtained can be estimated.

The heating conditions for obtaining the molten material vary depending on the raw materials to be used and the composition of the raw material mixture.

The heating temperature may be equal to or higher than a heating temperature at which the homogeneous amorphous intermediate compound as described above can be obtained. For example, the heating temperature is preferably 550°C or higher, more preferably 600°C or higher, and still more preferably 650°C or higher. The heating temperature is preferably 950°C or lower, more preferably 900°C or lower, and still more preferably 850°C or lower, from the viewpoint of preventing composition deviation due to volatilization of the components. The heating temperature may be changed stepwise in the above temperature range. The higher the halogen content represented by [Ha]/[P] (atomic ratio) in the composition is, the lower the heating temperature can be set.

The heating time may be equal to or longer than a time at which the homogeneous amorphous intermediate compound as described above can be obtained, and may vary depending on the scale. For example, the heating time is preferably 2 minutes or longer, more preferably 5 minutes or longer, and still more preferably 10 minutes or longer. The heating time is preferably 360 minutes or shorter, more preferably 180 minutes or shorter, and still more preferably 120 minutes or shorter, from the viewpoint of productivity.

By stirring during heating and melting, a molten material to be an amorphous intermediate compound can be made more homogeneous. The more homogeneous the mixing in the step i-1, the shorter the heating time in the subsequent step i-2.

A specific method during heating and melting is not particularly limited, and examples thereof include a method in which raw materials are charged into a heat-resistant container and heated in a heating furnace. The heat-resistant container is not particularly limited, and examples thereof include a heat-resistant container made of carbon, a heat-resistant container containing an oxide such as quartz, a quartz glass, a borosilicate glass, an aluminosilicate glass, alumina, zirconia, and mullite, a heat-resistant container containing a nitride such as silicon nitride and boron nitride, and a heat-resistant container containing a carbide such as silicon carbide. These heat-resistant containers may be a container in which a bulk is formed of the above-described material, or a layer of carbon, an oxide, a nitride, a carbide, or the like is formed.

The raw materials are preferably mixed in an inert atmosphere, and the molten material is also preferably obtained by heating in the inert atmosphere as it is. Examples of the inert atmosphere include an Ar atmosphere and a nitrogen atmosphere, and a nitrogen atmosphere is more preferable from the viewpoint of production cost. The molten material may be obtained by heating in a hydrogen sulfide gas atmosphere, a sulfur gas atmosphere, a sulfur dioxide gas atmosphere, or a mixed gas atmosphere of these gases. The raw materials may be heated in a vacuum-sealed state.

When Ha in the argyrodite crystal phase contains Br, Br is less likely to enter the crystal structure since Br has an ionic radius larger than that of Cl. Therefore, a homogeneous intermediate compound can be easily obtained by adjusting the heating conditions for obtaining the molten material by making the heating temperature higher than the above heating temperature range, making the heating time longer, or performing both.

However, in the manufacturing method i in which the intermediate compound is a molten material, the intermediate compound is likely to be homogeneous because of a high fluidity thereof. Therefore, since Br having a large ionic radius is also likely to enter the crystal structure, the above-described adjustment is not necessarily required.

The amorphous intermediate compound may be used as long as no peaks derived from the raw materials are observed in the high-temperature X-ray diffraction measurement, and from the viewpoint of homogeneity, the amorphous intermediate compound is preferably a homogeneous molten solution with no phase separation. When the argyrodite crystal has a LiP-S-Ha composition, the molten solution is mixed well without phase separation, and the presence or absence of phase separation can be confirmed visually. The presence or absence of phase separation may be confirmed based on whether light is optically transmitted without being scattered.

The step i-3 is a step of cooling the molten material, which is an amorphous intermediate compound, to precipitate an argyrodite crystal. As long as the lithium ion conductivity and elastic modulus of the solid electrolyte are not affected, impurities derived from the raw materials or the like may be contained in the argyrodite crystal.

Cooling conditions for precipitating crystals vary depending on the composition and target crystallization rate.

The cooling rate is not particularly limited as long as an argyrodite crystal can be precipitated, and from the viewpoint of productivity, the cooling rate is preferably 5°C/min or more, more preferably 10°C/min or more, and still more preferably 30°C/min or more. From the viewpoint of increasing the crystallization rate, the cooling rate is preferably 2000°C/min or less, more preferably 1000°C/min or less, and still more preferably 300°C/min or less.

It is more preferable to extend a residence time at 200°C to 450°C during cooling to perform crystal growth or reconstruction of the crystal structure from the viewpoint of improving the lithium ion conductivity. After cooling to room temperature once, a heat treatment may be additionally performed at a temperature of 200°C to 550°C.

The atmosphere during cooling is preferably an inert atmosphere, similar to that for the mixing of raw materials and heating for obtaining the molten material. When the heating for obtaining the molten material is performed under a vacuum-sealed state, the cooling may also be performed under the vacuum-sealed state as it is.

As described above, by adopting the manufacturing method i according to the present embodiment, in addition to S and at least one of Cl and Br, one or two or more elements different from S, Cl and Br can be present in the free anion site. A part of P in the 4b site and a part of S in the 16e site that is adjacent to P in the 4b site can be respectively substituted with other elements. Further, the value of the anion parameter may be 0.36 or less. As a result, even when the surface of the positive electrode active material is not treated with a coating agent, the deterioration in battery characteristics during repeated charging and discharging can be prevented.

A preferable aspect of the obtained solid electrolyte is the same as the preferable aspect described in the above <Sulfide Solid Electrolyte>.

Next, the manufacturing method ii will be described.

The step ii-1 is a step of mixing raw materials to obtain a homogeneous amorphous intermediate compound.

In order to obtain an argyrodite crystal, raw materials containing Li, P, S, and Ha are used, and the raw materials can be the same as those described in the step i-1 of the manufacturing method i and can be used under the same conditions.

A raw material, which is a source of an element other than S, Cl, and Br present in the free anion sites and an element to be substituted for P in the 4b site and S in the 16e site, is also mixed, and the raw materials can also be the same as those described in the step i-1 of the manufacturing method i and can be used under the same conditions.

An amorphous intermediate compound can be obtained by adopting conditions that are much stricter than in the related art in mixing these raw materials.

An amorphous (non-crystalline) intermediate compound means that no peaks derived from the raw materials are observed in the X-ray diffraction measurement, and this means that the amorphous intermediate compound is a homogeneous compound that is different from a mixture of the raw materials.

By forming the amorphous intermediate compound, it becomes easier to obtain an argyrodite crystal satisfying at least one of the (A) S, at least one of Cl and Br, and one or two or more elements different from S, Cl and Br are present in a free anion site, and (B) a part of P in a 4b site and a part of S in a 16e site that is adjacent to P in the 4b site are respectively substituted with other elements.

When using a mechanical milling method using a ball mill to mix the raw materials, examples thereof include a rotary ball mill that provides rotation movement to a container, a vibrating ball mill that provides vibrational movement, a planetary ball mill that provides revolution and rotational movement, a bead mill, and Atritor (registered trademark), and any of these methods can be applied as long as the conditions are such that an amorphous intermediate compound can be obtained. Among them, a planetary ball mill or a bead mill having a higher mixing force or pulverizing force is preferable.

In the case of the mechanical milling method using a ball mill, the higher the rotation speed, the longer the mixing time, and the smaller the particle diameter of the ball, the higher the mixing force and pulverizing force.

The rotation speed varies depending on the type of ball mill to be used and other conditions, and is preferably 200 rpm or more, more preferably 300 rpm or more, and still more preferably 400 rpm or more. The upper limit of the rotation speed is not particularly limited, and the rotation speed is preferably 1000 rpm or less, and more preferably 800 rpm or less, from the viewpoint of mechanical strength.

A plurality of rotation speeds may be combined, such as initially mixing at a low rotation speed for a certain period of time, then increasing the rotation speed to a high rotation speed and mixing for a certain period of time.

The mixing time varies depending on the type of ball mill to be used and other conditions, and is preferably 0.5 hours or longer, more preferably 2 hours or longer, and still more preferably 4 hours or longer. The upper limit of the mixing time is not particularly limited, and the mixing time is preferably 50 hours or shorter, and more preferably 20 hours or shorter, from the viewpoint of productivity.

The particle diameter of the ball varies depending on the type of ball mill to be used and other conditions, and is preferably 20 mm or less, more preferably 10 mm or less, and still more preferably 5 mm or less. For the lower limit of the particle diameter of the ball, the particle diameter is preferably 0.3 mm or more, and more preferably 1 mm or more, from the viewpoint of ease of handling. Two or more kinds of balls having different particle diameters may be used in combination.

An amount of balls to be used varies depending on the type of ball mill to be used and other conditions. From the viewpoint of mixing force and pulverizing force, the weight of the balls to be used is preferably 20% or more, more preferably 50% or more, and still more preferably 100% or more, and is preferably 1000% or less, more preferably 500% or less, and still more preferably 400% or less, with respect to a total weight of the raw materials.

The ball mill may be dry mixing or wet mixing using a dispersion medium, and dry mixing is preferable from the viewpoint of efficiently transmitting energy.

By the mixing as described above, not only the raw materials are mixed, but also the mixed powder is made amorphous, and a homogeneous amorphous intermediate compound can be obtained.

As described above, the obtained amorphous intermediate compound means that no XRD peaks derived from the raw materials are observed, and it may be considered that a more homogeneous intermediate is obtained when it can be confirmed in the Raman spectrum that peaks at positions of the raw materials completely disappear and a peak appears at another position.

In the powder X-ray diffraction measurement used for verifying the obtained amorphous intermediate compound, when the particle diameter of the sample powder is very small, no peak may be observed even when the sample powder is crystalline. Therefore, from the viewpoint of distinguishing a mixture of raw materials having a very small particle diameter from an amorphous intermediate compound, the particle diameter of the intermediate compound is preferably 30 nm or more. From the viewpoint of handling the powder, the particle diameter of the intermediate compound is preferably 100 nm or more, and more preferably 1 µm or more. On the other hand, in order to increase the surface area of the powder and efficiently advance the subsequent reaction, the particle diameter of the intermediate compound is preferably 50 µm or less, more preferably 10 µm or less, and still more preferably 5 µm or less.

The particle diameter of the intermediate compound in the present description is a primary particle diameter determined from an image obtained by scanning electron microscopic (SEM) observation. The primary particle diameter is determined by performing SEM measurement without exposure to the air, observing at a magnification of 2000 times and an accelerating voltage of 2 kV, measuring the particle diameters of 20 particles reflected within an appropriate field of view, and determining an average value thereof as the primary particle diameter.

The step ii-2 is a step of heating and sintering the amorphous intermediate compound obtained in the step ii-1 to precipitate an argyrodite crystal. As described above, as long as the lithium ion conductivity and elastic modulus of the solid electrolyte are not affected, impurities derived from the raw materials or the like may be contained in the argyrodite crystal.

The heating is preferably performed, for example, under an inert gas atmosphere, under a hydrogen sulfide gas atmosphere, under a sulfur gas atmosphere, or under a vacuum-sealed state.

The heating temperature is preferably 350°C or higher, more preferably 400°C or higher, and still more preferably 450°C or higher, from the viewpoint of promoting the solid-phase reaction, that is, crystallization. From the viewpoint of preventing thermal decomposition, the heating temperature is preferably lower than 600°C, and more preferably 575°C or lower.

From the same viewpoint, the heating time is preferably 1 hour or longer, more preferably 2 hours or longer, and still more preferably 4 hours or longer. The heating time is preferably 100 hours or shorter, more preferably 50 hours or shorter, and still more preferably 24 hours or shorter.

As described above, by adopting the manufacturing method ii according to the present embodiment, in addition to S and at least one of Cl and Br, one or two or more elements different from S, Cl and Br can be present in the free anion site. Further, a part of P in the 4b site and a part of S in the 16e site that is adjacent to P in the 4b site can be respectively substituted with other elements. Further, the value of the anion parameter may be 0.36 or less. As a result, even when the surface of the positive electrode active material is not treated with a coating agent, the deterioration in battery characteristics during repeated charging and discharging can be prevented.

A preferable aspect of the obtained solid electrolyte is the same as the preferable aspect described in the above <Sulfide Solid Electrolyte>.

### Example

The present invention will be specifically described below with reference to Examples, but the present invention is not limited thereto.

Example 1 to Example 9 and Example 12 to Example 14 are Inventive Examples, and Example 10 and Example 11 are Comparative Examples.

### (Example 1)

Under a dry nitrogen atmosphere, a lithium sulfide powder (manufactured by Sigma, purity: 99.98%), a diphosphorus pentasulfide powder (manufactured by Sigma, purity: 99%), a lithium chloride powder (manufactured by Sigma, purity: 99.99%), a lithium bromide powder (manufactured by Sigma, purity: 99.995%), and a lithium oxide powder (manufactured by Sigma, purity: 97%) were weighed so as to achieve a composition ratio described in "Composition" in Table 1, and mixed in the same atmosphere for 1 minute in a High mode using a mixer (manufactured by WARING, X-TREME (MX1100XTM)) to obtain a raw material mixture. The obtained raw material mixture was charged into a heat-resistant container, heated at 300°C for 1 hour in an atmosphere having a dew point of -60°C, and then the temperature was raised, followed by heating at 700°C for 0.5 hours to obtain a molten material. The molten material was cooled to room temperature at a rate of 300°C/min to precipitate an argyrodite crystal, thereby obtaining an intended sulfide solid electrolyte containing the argyrodite crystal.

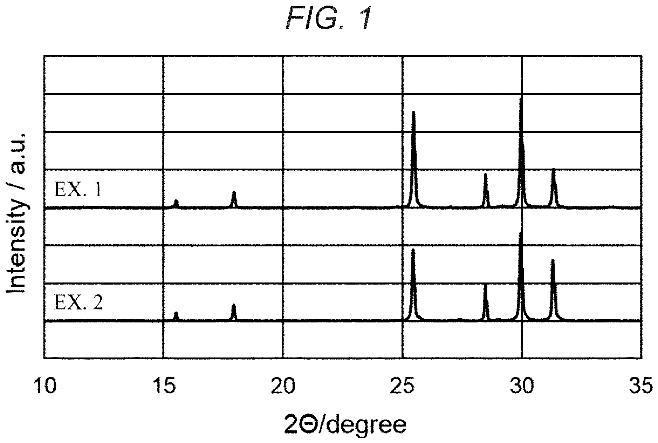

The results of XRD measurement (Smart Lab, manufactured by Rigaku Corporation) of the obtained argyrodite crystal under the following conditions were shown in the upper part in FIG. 1, and it was confirmed from the obtained diffraction pattern that the argyrodite crystal was a cubic crystal.

### (Conditions)

The conditions of the XRD measurement are as follows.

Radiation Source: CuKα ray (λ = 1.5418 Å), tube bulb voltage: 45 kV, tube bulb current: 200 mA, scanning angle: 10° to 100°, scanning speed: 5°/min, number of steps: 0.01°/step.

### (Example 2 to Example 7 and Example 9)

Sulfide solid electrolytes each containing an argyrodite crystal of Example 2 to Example 7 and Example 9 were obtained in the same manner as in Example 1 except that composition ratios were changed to those described in "Composition" in Table 1.

In Example 2, Example 3, and Example 9 in which F was contained in the composition, in addition to the lithium sulfide powder, the diphosphorus pentasulfide powder, the lithium chloride powder, the lithium bromide powder, and the lithium oxide powder, a lithium fluoride powder (manufactured by Sigma, purity: 99.98%) was weighed and used. In Example 7 in which Br was not contained in the composition, a lithium bromide powder was not used. In Example 9 in which O was not contained in the composition, a lithium oxide powder was not used. With respect to the obtained argyrodite crystal of Example 2, the results of XRD measurement (Smart Lab, manufactured by Rigaku Corporation) under the same conditions as in Example 1 were shown in the lower part in FIG. 1, and it was confirmed from the obtained diffraction pattern that the argyrodite crystal was a cubic crystal.

### (Example 8)

A sulfide solid electrolyte containing an argyrodite crystal of Example 8 was obtained in the same manner as in Example 1 except that a composition ratio was changed to that described in "Composition" in Table 1.

The obtained sulfide solid electrolyte was subjected to XRD measurement (Smart Lab, manufactured by Rigaku Corporation) under the following conditions.

### (Conditions)

The conditions of the XRD measurement are as follows.

Radiation Source: CuKα ray (λ = 1.5418 Å), tube bulb voltage: 45 kV, tube bulb current: 200 mA, scanning angle: 10° to 100°, scanning speed: 5°/min, number of steps: 0.01°/step.

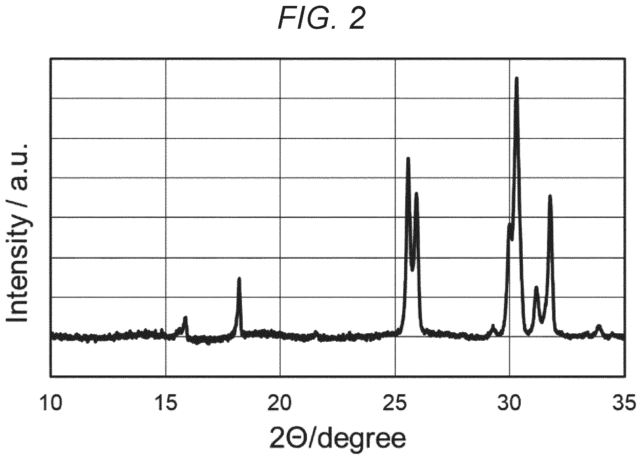

The obtained XRD pattern was shown in FIG. 2, and peaks were observed at positions of 2θ = 15.9°, 18.2°, 25.6°, 25.9°, 30.0°, 30.3°, 31.2°, and 31.8°. It was found from the peak position that the crystal was a single-phase argyrodite crystal, which was a rhombohedral system.

### (Example 10 and Example 11)

Under a dry nitrogen atmosphere, a lithium sulfide powder (manufactured by Sigma, purity: 99.98%), a diphosphorus pentasulfide powder (manufactured by Sigma, purity: 99%), and a lithium chloride powder (manufactured by Sigma, purity: 99.99%) were weighed so as to obtain a composition ratio described in "Composition" in Table 1, mixed in the same atmosphere by a mixer, and then further mixed by using a planetary ball mill (LP-M2, manufactured by Ito Seisakusho Co., Ltd.) to obtain a raw material mixture. The mixing by the planetary ball mill was performed at 400 rpm for 20 hours using a ball having a particle diameter of 10 mm. The obtained raw material mixture was vacuum-sealed in a heat-resistant container, heated and sintered at 450°C for 5 hours to precipitate an argyrodite crystal, thereby obtaining a sulfide solid electrolyte containing the argyrodite crystal.

In Example 11, in addition to the lithium sulfide powder, the diphosphorus pentasulfide powder, and the lithium chloride powder, a lithium bromide powder (manufactured by Sigma, purity: 99.995%) was weighed and used.

The obtained argyrodite crystal was confirmed to be a cubic crystal from the results of XRD measurement (Smart Lab, manufactured by Rigaku Corporation) under the following conditions.

### (Conditions)

Measurement conditions were as follows.

Radiation Source: CuKα ray (λ = 1.5418 Å), tube bulb voltage: 45 kV, tube bulb current: 200 mA, scanning angle: 10° to 100°, scanning speed: 5°/min, number of steps: 0.01°/step.

### (Example 12)

Under a dry nitrogen atmosphere, a lithium sulfide powder (manufactured by Sigma, purity: 99.98%), a diphosphorus pentasulfide powder (manufactured by Sigma, purity: 99%), a lithium chloride powder (manufactured by Sigma, purity: 99.99%), a lithium bromide powder (manufactured by Sigma, purity: 99.995%), and a lithium oxide powder (manufactured by Sigma, purity: 97%) were weighed so as to obtain a composition ratio described in "Composition" in Table 2, and mixed in the same atmosphere for 1 minute in a High mode using a mixer (manufactured by WARING, X-TREME (MX1100XTM))to obtain a raw material mixture. The obtained raw material mixture was charged into a heat-resistant container, heated at 300°C for 1 hour in an atmosphere having a dew point of -60°C, and then the temperature was raised, followed by heating at 700°C for 0.5 hours to obtain a molten material. The molten material was cooled to room temperature at a rate of 300°C/min. The atmosphere was a N₂ atmosphere having the dew point of -60°C and an oxygen concentration of 100 ppm or less. Thereafter, mixing by a planetary ball mill was performed at 400 rpm for 20 hours using a ball having a particle diameter of 10 mm, and the obtained mixture was vacuum-sealed in a heat-resistant container, heated and sintered at 450°C for 5 hours to obtain a sulfide solid electrolyte containing an argyrodite crystal.

### (Example 13 and Example 14)

Sulfide solid electrolytes each containing an argyrodite crystal of Example 13 and Example 14 were obtained in the same manner as in Example 12 except that composition ratios were changed to those described in "Composition" in Table 2.

In Example 13 in which Si was contained in the composition, in addition to the lithium sulfide powder, the diphosphorus pentasulfide powder, the lithium chloride powder, the lithium bromide powder, and the lithium oxide powder, silicon disulfide (manufactured by American Elements, purity: 99.9%) was weighed and used. In Example 14 in which Sn was contained in the composition, in addition to the lithium sulfide powder, the diphosphorus pentasulfide powder, the lithium chloride powder, the lithium bromide powder, and the lithium oxide powder, tin disulfide (manufactured by Kojundo Chemical Lab. Co., Ltd., purity: 3 Nup) was weighed and used.

### [Evaluation: Anion Parameter]

An anion parameter of the obtained sulfide solid electrolyte was determined by the following procedure based on results of synchrotron XRD measurement.

### (Synchrotron XRD Measurement)

With respect to Example 1, Example 3, Example 5, and Example 11 to Example 14, the synchrotron X-ray diffraction measurement was performed under the following conditions.
Measurement method: powder X-ray diffraction
Light energy used for measurement: 17.71 keV
Sample shape: capillary having a diameter of 0.3 mm
Measurement angle range: 2θ = 0.1° to 95°
Step width (Δ2θ) = 0.010°
Detector: Debye Scherer camera and two-dimensional semiconductor detector

### (Structure Analysis)

Regarding an example of the synchrotron X-ray diffraction measurement, the crystal structure was refined by a Rietveld method using RIETAN-FP software. The structure having the lowest Rwp value was determined as the crystal structure of each example. The Rwp value is a reliability factor R-weighted pattern (Rwp) which is a general standard for the entire analysis range in fitting for structural refinement using Rietveld analysis. The lower the Rwp value, the better, and in the present analysis, the lowest Rwp values were all less than 10%. Accordingly, the crystal structure of the argyrodite crystal in the sulfide solid electrolyte was determined.

### (Anion Parameter)

From the proportion of free anions obtained from the results of the structural analysis, an anion parameter represented by {(1/χ_{(S)}) × [S²⁻] + (1/χ_{(O)}) × [O²⁻] + (1/χ_{(Br)}) × [Br⁻] + (1/χ_{(Cl)}) × [Cl⁻] + (1/χ_{(F)}) × [F⁻]} of the argyrodite crystal of each example was calculated. The content of each anion is a value normalized such that [S²⁻] + [O²⁻] + [Br⁻] + [Cl⁻] + [F⁻] = 1.

The electronegativity of each element in the anion parameter is χ_{(S)} = 2.5, χ_{(O)} = 3.5, χ_{(Br)} = 2.8, χ_{(Cl)} = 3.0, and χ_{(F)} = 4.0.

Regarding Example 2, Example 4, and Example 6 to Example 10, the content of each anion is a value determined by the following equation with reference to the analysis results of Example 1, Example 3, and Example 5 obtained above after confirming that the phase is a single phase from the XRD pattern. [S2-] = {(value of S in Table 1 or Table 2) - (value of P in Table 1 or Table 2) × 4}/normalized value
[O²⁻] = (value of O in Table 1 or Table 2)/normalized value
[Br⁻] = (value of Br in Table 1 or Table 2)/normalized value
[Cl⁻] = (value of Cl in Table 1 or Table 2)/normalized value
[F⁻] = (value of F in Table 1 or Table 2)/normalized value

The normalized value is a value adjusted such that [S²⁻] + [O²⁻] + [Br⁻] + [Cl⁻] + [F⁻] = 1.

The results are shown in "Anion parameter" in Table 1 and Table 2.

### (Lithium Ion Conductivity)

The sulfide solid electrolyte was pulverized in a mortar, coarse particles were removed through a mesh pass having an opening of 100 µm, and 100 mg of the sulfide solid electrolyte was weighed. Next, the lithium ion conductivity of the measurement sample was measured by using an AC impedance measuring device (potentiostat/galvanostat VSP, manufactured by Bio-Logic Sciences Instruments) while pressure-molding the measurement sample with an area of 10 mm in diameter at 380 MPa.

The measurement conditions were as follows: a measurement frequency of 100 Hz to 1 MHz, a measurement voltage of 100 mV, and a measurement temperature of 25°C.

The results are shown in "Li ion conductivity (mS/cm)" in Table 1 and Table 2.

### (Battery Characteristics)

The sulfide solid electrolyte was dry-pulverized under a dry nitrogen atmosphere using an alumina ball having a particle diameter of 2 mm in a planetary ball mill (model number LP-M2, manufactured by Ito Seisakusho Co., Ltd.). Next, the pulverized sulfide solid electrolyte was passed through a sieve having an opening of 43 µm to obtain a sulfide solid electrolyte powder having a particle diameter distribution with an average particle diameter D₅₀ of 3 µm.

The average particle diameter D₅₀ was measured using a laser diffraction particle diameter distribution analyzer MT 3300 EXII manufactured by Microtrac, and the average particle diameter D₅₀ was measured based on a chart of the obtained volume-based particle diameter distribution.

A layered rock-salt NMC 811 powder (purchased from MTI Corporation, volume average particle diameter: 11.75 µm) was used as a positive electrode active material, and 34 parts by mass of the sulfide solid electrolyte powder prepared above, 60 parts by mass of the positive electrode active material, and 6 parts by mass of a conductive aid (acetylene black, manufactured by Denka Company Limited, HS 100) were mixed to prepare a positive electrode mixture.

80 mg of the sulfide solid electrolyte powder prepared above was charged into a plastic cylinder having a diameter of 10 mm and pressure-molded to form a solid electrolyte layer. Next, 6 mg of the positive electrode mixture prepared above was charged into the same cylinder, and pressure molding was performed again to form a positive electrode layer. Further, an indium foil and a lithium foil were charged from the side opposite to the positive electrode mixture to form a negative electrode layer. An all-solid-state lithium-ion secondary battery was prepared in this manner, and a charging and discharging test was performed at a confining pressure of 10 kN.

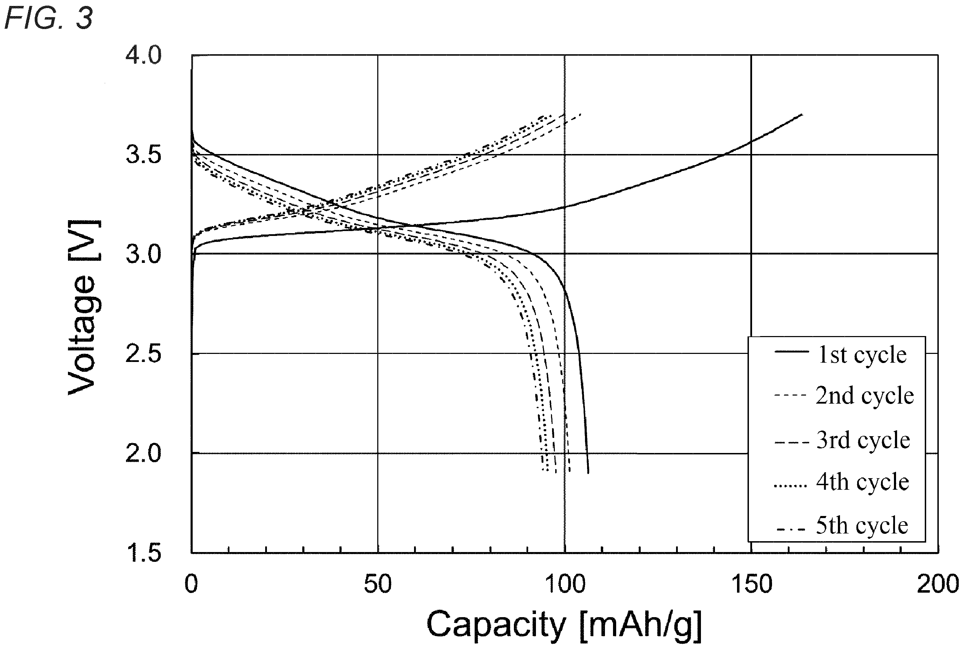

In the charging and discharging test, a constant current charging and discharging test was conducted for 5 cycles under the following conditions: measurement temperature: 25°C, charging current density: 0.05 C, discharging current density: 0.05 C, and charging and discharging potential range: 1.9 V to 3.7 V A charging and discharging curve of Example 1 is shown in FIG. 3.

From the results of the charging and discharging test, the initial characteristic and capacity retention ratio (%) represented by the following equations were determined, and the battery characteristics of the all-solid-state lithium-ion secondary battery were evaluated. Initial characteristic = (discharging capacity in first cycle/charging capacity in first cycle) Capacity retention ratio (%) = (discharging capacity in fifth cycle/discharging capacity in first cycle) × 100

The results of the battery characteristics are shown in items of "Initial characteristic", "Capacity retention ratio (%)", and "Determination" in Table 1 and Table 2. The criteria for the determination were as follows.
S: Both initial characteristic of 0.65 or more and capacity retention ratio of 88% or more are satisfied.
A: Both of initial characteristic of more than 0.60 and capacity retention ratio of more than 86% are satisfied, and one of the initial characteristic of less than 0.65 and the capacity retention ratio of less than 88% is satisfied.
B: At least one of the initial characteristic of 0.60 or less and the capacity retention ratio of 86% or less is satisfied.

### (Average Bond Distance)

In contrast to Example 12 to Example 14, an average bond distance between the 4b site in the PS₄³⁻ structure and the 16e site adjacent thereto was determined by synchrotron XRD measurement and Rietveld analysis. The results are shown in "Average bond distance" in Table 2.

**Table 1**

| | Com position | | | | | | | Anion parameter | | | | | | Evaluation | | | |
|---|---|---|---|---|---|---|---|---|---|---|---|---|---|---|---|---|---|
| | Li | P | S | O | Br | Cl | F | [S²⁻] | [O²⁻] | [Br⁻] | [Cl⁻] | [F⁻] | Anion parameter | Li ion conductivity (mS/cm) | Initial characteristic | Capacity retention ratio (%) | Determination |
| Ex. 1 | 5.4 | 1.0 | 4.1 | 0.3 | 0.8 | 0.8 | 0.0 | 0.03 | 0.16 | 0.41 | 0.40 | 000 | 0.337 | 9.9 | 0.65 | 89 | S |
| Ex. 2 | 5.4 | 1.0 | 4.1 | 0.3 | 0.75 | 0.75 | 0.1 | 0.05 | 0.15 | 0.38 | 0.38 | 0.05 | 0.334 | 8.0 | 0.70 | 91 | S |
| Ex. 3 | 5.4 | 1.0 | 4.1 | 0.3 | 0.7 | 0.7 | 0.2 | 0.02 | 0.16 | 0.35 | 0.37 | 0.10 | 0.327 | 7.5 | 0.72 | 92 | S |
| Ex. 4 | 5.3 | 0.95 | 3.9 | 0.3 | 0.8 | 0.8 | 0.0 | 0.05 | 0.15 | 0.40 | 0.40 | 0.00 | 0.339 | 11.5 | 0.66 | 90 | S |
| Ex. 5 | 5.3 | 0.95 | 3.8 | 0.4 | 0.8 | 0.8 | 0.0 | 0.00 | 0.22 | 0.38 | 0.40 | 0.00 | 0.332 | 10.3 | 0.73 | 94 | S |
| Ex. 6 | 5.3 | 0.95 | 3.9 | 0.3 | 0.1 | 1.5 | 0.0 | 0.05 | 0.15 | 0.05 | 0.75 | 0.00 | 0.331 | 7.5 | 0.75 | 93 | S |
| Ex. 7 | 5.3 | 0.95 | 3.9 | 0.3 | 0.0 | 1.6 | 0.0 | 0.05 | 0.15 | 0.00 | 0.80 | 0.00 | 0.330 | 6.5 | 0.75 | 93 | S |
| Ex. 8 | 5.1 | 0.95 | 3.8 | 0.2 | 0.8 | 1.0 | 0.0 | 0.00 | 0.10 | 0.40 | 0.50 | 0.00 | 0.338 | 2.3 | 0.70 | 89 | S |
| Ex. 9 | 5.4 | 1.0 | 4.4 | 0.0 | 0.9 | 0.0 | 0.7 | 0.20 | 0.00 | 0.45 | 0.00 | 0.35 | 0.328 | 5.4 | 0.75 | 93 | S |
| Ex. 10 | 6.0 | 1.0 | 5.0 | 0.0 | 0.0 | 1.0 | 0.0 | 0.50 | 0.00 | 0.00 | 0.50 | 0.00 | 0.367 | 0.8 | 0.57 | 85 | B |
| Ex. 11 | 5.4 | 1.0 | 4.4 | 0.0 | 0.8 | 0.8 | 0.0 | 0.20 | 0.00 | 0.40 | 0.40 | 0.00 | 0.356 | 8.8 | 0.57 | 84 | B |

**Table 2**

| | Composition | | | | | | | Anion parameter | | | | | Evaluation | | | | |
|---|---|---|---|---|---|---|---|---|---|---|---|---|---|---|---|---|---|
| | Li | P | S | O | Br | Cl | M | [S²⁻] | [O²⁻] | [Br⁻] | [Cl⁻] | Anion parameter | Li ion conductivity (mS/cm) | Initial characteristic | Capacity retention ratio (%) | Determination | Average bond distance |
| Ex. 12 | 5.4 | 1.0 | 4.4 | 0.1 | 0.8 | 0.8 | 0.0 | 0.2 | 0.1 | 0.4 | 0.4 | 0.350 | 9.9 | 0.62 | 88 | A | 2.04 Å |
| Ex. 13 | 5.4 | 0.8 | 4.3 | 0.1 | 0.8 | 0.8 | 0.2 (Si) | 0.2 | 0.1 | 0.4 | 0.4 | 0.350 | 7.6 | 0.70 | 90 | S | 2.07 Å |
| Ex. 14 | 5.4 | 0.9 | 4.4 | 0.1 | 0.8 | 0.8 | 0.1 (Sn) | 0.2 | 0.1 | 0.4 | 0.4 | 0.350 | 7.5 | 0.68 | 90 | S | 2.08 Å |

In the argyrodite crystals of Example 1 and Example 4 to Example 8, O is present in the free anion site as an element other than S and at least one of Cl and Br. In Example 9, F is present as another element, and in Example 2 and Example 3, both O and F are present as other elements. The anion parameters are all 0.36 or less. In all of these cases, the battery evaluation was good, and the deterioration in the battery characteristics during repeated charging and discharging can be prevented.

On the other hand, in Example 10 and Example 11, no other elements were present, and the deterioration in battery characteristics during repeated charging and discharging was large.

In Example 12 in which O was present as another element, the effect of the present invention was exhibited, but in Example 13 and Example 14 in which a part of P in the 4b site was substituted with Si or Sn in addition to O, the values of the anion parameters were the same, but the deterioration in battery characteristics during repeated charging and discharging can be more significantly prevented.

Although the present invention has been described in detail with reference to specific embodiments, it is apparent to those skilled in the art that various changes and modifications can be made without departing from the spirit and scope of the present invention. The present application is based on a Japanese Patent Application (No. 2021-162230) filed on September 30, 2021, and the contents thereof are incorporated herein by reference.

## Claims

1. A sulfide solid electrolyte to be used for a lithium-ion secondary battery, the sulfide solid electrolyte comprising:
an argyrodite crystal comprising Li, P, S, and Ha, wherein
the Ha represents at least one element selected from the group consisting of F, Cl, Br, and I, and the Ha comprises at least one of Cl and Br,
the argyrodite crystal satisfies at least one of (A) and (B); (A) is that S, at least one of Cl and Br, and one or two or more elements different from S, Cl and Br are present in a free anion site; and (B) is that a part of P in a 4b site and a part of S in a 16e site that is adjacent to P in the 4b site are respectively substituted with other elements, and
in the argyrodite crystal, relationships of {(1/χ_{(S)}) × [S²⁻] + (1/χ_{(O)}) × [O²⁻] + (1/χ_{(Br)}) × [Br⁻] + (1/χ_{(Cl)}) × [Cl⁻] + (1/χ_{(F)}) × [F⁻]} ≤ 0.36 and [S²⁻] + [O²⁻] + [Br⁻] + [Cl⁻] + [F⁻] = 1 are satisfied, provided that [S²⁻], [O²⁻], [Br⁻], [Cl⁻], and [F⁻] represent free anion contents, and χ_{(S)}, χ_{(O)}, χ_{(Br)}, χ_{(Cl)}, and χ_{(F)} represent electronegativities thereof.

2. The sulfide solid electrolyte according to claim 1, wherein
the argyrodite crystal further comprises at least one of O and F.

3. The sulfide solid electrolyte according to claim 1 or 2, wherein
a relationship of {(1/χ_{(S)}) × [S²⁻] + (1/χ_{(O)}) × [O²⁻] + (1/χ_{(Br)}) × [Br⁻] + (1/χ_{(Cl)}) × [Cl⁻] + (1/χ_{(F)}) × [F⁻]} ≤ 0.34 is satisfied, provided that [S²⁻], [O²⁻], [Br⁻], [Cl⁻], and [F⁻] represent the free anion contents, and χ_{(S)}, χ_{(O)}, χ_{(Br)}, χ_{(Cl)}, and χ_{(F)} represent the electronegativities thereof.

4. The sulfide solid electrolyte according to any one of claims 1 to 3, wherein
the argyrodite crystal satisfies the (B), and
an average bond distance between the 4b site and the 16e site adjacent thereto is 2.07 Å or more.

5. The sulfide solid electrolyte according to any one of claims 1 to 4, wherein
the argyrodite crystal satisfies the (B), and
an element M substituted for the part of P in the 4b site forms an MS₄ tetrahedral structure having an ionic radius larger than an ionic radius of PS₄³⁻.

6. The sulfide solid electrolyte according to claim 5, wherein
the element M in the MS₄ tetrahedral structure is at least one of Si and Sn.

7. The sulfide solid electrolyte according to any one of claims 1 to 6, wherein
the argyrodite crystal satisfies the (A), and
the free anion contents satisfy a relationship of 0 < {[Br⁻]/([F⁻] + [Cl⁻] + [Br⁻])} < 2.

8. The sulfide solid electrolyte according to any one of claims 1 to 7, wherein
an electromotive force of the lithium-ion secondary battery is 4.3 V or more.
